**Europäisches Patentamt**

**European Patent Office**

**Office européen des brevets**

(19)

(11) Numéro de publication : **0 505 246 A1**

## (12) DEMANDE DE BREVET EUROPEEN

(21) Numéro de dépôt : **92400676.0**

(22) Date de dépôt : **13.03.92**

(51) Int. Cl.⁵ : **C04B 35/00,** H01P 7/10, H01B 3/12

(30) Priorité : **18.03.91 FR 9103268**

(43) Date de publication de la demande : **23.09.92 Bulletin 92/39**

(84) Etats contractants désignés : **AT BE DE ES FR GB IT NL PT**

(71) Demandeur : **TEKELEC AIRTRONIC**
**5, rue Carle Vernet**
**F-92315 Sèvres Cédex (FR)**

(72) Inventeur : **Filhol, Pierre**
**99 Rue de Romainville**
**F-93100 Montreuil (FR)**
Inventeur : **Forterre, Gérard Ernest Emile**
**3 Rue Pasteur Martin Luther King**
**F-92700 Colombes (FR)**

(74) Mandataire : **Berger, Helmut et al**
**Cabinet Z. WEINSTEIN 20, avenue de**
**Friedland**
**F-75008 Paris (FR)**

(54) **Composition céramique pour résonateur diélectrique et procédé de fabrication de cette composition.**

(57)    L'invention concerne une composition céramique pour résonateur diélectrique.

La composition est caractérisée en ce qu'elle est formée par une phase pérovkite complexe pure de formule $BaZn_{1/3(1-y)}Ni_{y/3}Ta_{2/3}O_3$, avec $0 \leqq y \leqq 0,25$, y étant un paramètre de proportions molaires, et d'une faible quantité en poids de 0,2 à 1% d'un dopant s'intégrant dans la structure cristalline de la phase pérovskite.

L'invention est utilisable pour des résonateurs diélectriques à coefficient de qualité élevé et stables en température.

EP 0 505 246 A1

L'invention concerne une composition céramique, pour résonateur diélectrique stable en température et à coefficient de qualité élevé et un procédé pour la fabrication d'une telle composition.

De tels résonateurs diélectriques sont utilisés pour la réalisation de filtres et d'oscillateurs travaillant dans le domaine des hautes fréquences de quelques unités à quelques dizaines de GHz. Il est connu que le coefficient de qualité d'une composition céramique diélectrique décrôit lorsque la fréquence augmente. Dans le brevet français No. 88 04 601 du 29 Février 1988, il est décrit une composition à base de dioxyde de zirconium, de titane et d'étain qui a un produit Q x F qui ne dépasse pas la valeur de 60 000 GHz, Q et F représentant respectivement le coefficient de qualité et la fréquence.

La présente invention a pour objet de proposer une composition céramique ayant un produit Q x F plus élevé que les compositions connues.

Pour atteindre ce but, la composition céramique selon l'invention est caractérisée en ce qu'elle est formée par une phase pérovskite complexe pure de formule $BaZn_{1/3(1-y)}Ni_{y/3}Ta_{2/3}O_3$ avec $0 \leq y \leq 0,25$ et d'un dopant s'intégrant dans la structure cristalline de la phase pérovskite, y étant un paramètre de proportions molaires.

Selon une caractéristique de l'invention, le dopant est composé de $Zr_z Ti_t Sn_s O_4$ où z, t et s sont des paramètres exprimant des proportions molaires et satisfaisant les inégalités suivantes :

$$0,9 \leq t < 1,1$$
$$0,1 \leq s \leq 0,4$$
$$0,6 \leq z \leq 0,9$$

et que le dopant est présent dans la composition à un taux de 0,1 à 1% en poids.

Le procédé de fabrication de cette composition est caractérisé en ce que l'on ajoute à une poudre de carbonate de baryum, d'oxydes de zinc et de tantale dans des proportions correspondant à la formule $BaZn_{1/3(1-y)}Ni_{y/3}Ta_{2/3}O_3$ avec $0 \leq y \leq 0,25$, le dopant précité en une quantité entre 0,1 à 1% en poids, mélange les poudres et le dopant en milieu aqueux ou alcoolique, effectue un préfrittage du mélange ainsi obtenu à une température comprise entre 1200 à 1350° pendant une durée de temps de 1 heure à 24 heures, puis on broie le produit de préfrittage, forme des pastilles et soumet ces dernières à une opération de frittage.

Selon une caractéristique avantageuse de l'invention, pour former les pastilles précitées, on incorpore à la poudre obtenue à la suite du broyage du produit de préfrittage un liant organique et presse ce mélange dans une matrice appropriée pour former lesdites pastilles.

Selon une autre caractéristique avantageuse de l'invention, le liant organique est incorporé en une quantité de 0,1 à 5% en poids.

L'invention sera mieux comprise, et d'autres buts, caractéritiques, détails et avantages de celle-ci apparaîtront plus clairement au cours de la description explicative qui va suivre, d'un mode de réalisation de l'invention, donné uniquement à titre d'exemple.

La composition céramique pour résonateur à coefficient de qualité élevé et stable en température, est à base d'oxydes de baryum, de zinc, le cas échéant de nickel formant un substituant partiel du zinc et de tantale et d'un dopant. Plus précisément, la composition céramique diélectrique selon l'invention comprend une phase pérovskite complexe pure de formule $BaZn_{1/3(1-y)}Ni_{y/3}Ta_{2/3}O_3$ avec $0 \leq y \leq 0,25$ et un dopant permettant de réaliser facilement la composition céramique par frittage de façon à obtenir le produit Q X F élevé susmentionné, Q et F représentent la qualité et la fréquence et y étant un paramètre de proportions molaires. Le dopant est une composition céramique qui est ajouté au cours de la préparation céramique de la phase pérovskite pure.

Le dopant est formé par une poudre de titanate de zirconium et d'étain, correspondant à la formule $Zr_z Ti_t Sn_s O_4$, où z, t et s sont des paramètres indiquant les proportions molaires des matières premières contenues dans le dopant. Ces paramètres satisfont les inégalités suivantes :

$$0,9 \leq t \leq 1,1$$
$$0,6 \leq z \leq 0,9$$
$$0,1 \leq s \leq 0,4.$$

Dans une composition préférée de l'invention, les paramètres t, z et s ont des valeurs de respectivement 1,02 ; 0,64 et 0,34, la somme t+z+s étant égale à 2.

Le dopant est ajouté en une quantité comprise entre 0,2 et 1,0% en poids.

Le tableau suivant indique pour huit échantillons. Différentes valeurs de quantité de dopant, en pourcentage de poids, les valeurs de la constante diélectrique K, du coefficient de stabilité de la fréquence a, du coefficient de qualité Q et du produit Q x F. La constante diélectrique est déterminée par la méthode de HAKKI et COLEMAN. Le coefficient de stabilité a de la fréquence est déterminé par le tracé de la fréquence de résonance en fonction de la température. C'est la pente relative moyenne de la courbe entre 0 et 40°C, exprimée en $10^{-6}$/°C.

Le coefficient de qualité Q est déterminé à partir du rapport de la fréquence de résonance à la largeur à mi-hauteur du pic de résonance et représente le facteur de qualité global de la cellule de test.

TABLEAU

| N° d'échan- tillon | X taux de dopant % en poids | K | a $10^{-6}$/°C | Q à 6,5GHz | Q X F GHz |
|---|---|---|---|---|---|
| 1 | 0 | 30,5 | 8,5 | 6560 | 39900 |
| 2 | 0,2 | 30,9 | 9,15 | 6540 | 43000 |
| 3 | 0,4 | 31,8 | 9,09 | 10040 | 65500 |
| 4 | 0,5 | 31,5 | 10,1 | 13330 | 87200 |
| 5 | 0,65 | 30,3 | 11,2 | 15780 | 101900 |
| 6 | 0,75 | 31,0 | 10,9 | 15120 | 100100 |
| 7 | 1 | 30,1 | 14,9 | 12700 | 83400 |
| 8 | 0,5 | 29,1 | 6,5 | 13900 | 94500 |

Dans les échantillons No.1 à No.7, la phase pérovskite ne comprend pas de nickel (y = 0), tandis que dans l'échantillon No.8 le zinc est partiellement remplacé par du nickel, à raison de y = 0,2.

Il apparaît du tableau que le dopant améliore les propriétés diélectriques du résonateur et notamment le facteur de qualité Q. On constate qu'on peut réaliser des résonateurs diélectriques ayant un produit Q x F supérieur à 100 000 GHz lorsque le dopant est ajouté en une quantité comprise entre 0,65% et 0,75% en poids à une phase pérovskite sans nickel. Concernant l'échantillon No.8, il montre qu'en substituant partiellement du nickel au zinc, selon y = 0,2, on peut réduire la valeur du coefficient a tout en conservant un produit QXF de valeur élevée de 94500.

On décrira ci-après le procédé de fabrication d'une composition céramique pour résonateur diélectrique selon la description qui vient d'être faite.

La préparation de la composition céramique est effectuée à partir de poudres pures de carbonate de baryum, d'oxyde de zinc et d'oxyde de tantale et le cas échéant d'oxyde de nickel, pesées dans des proportions correspondant à la formule $BaZn_{1/3(1-y)}Ni_{y/3}Ta_{2/3}O_3$. Puis on ajoute une quantité x telle que définie plus haut, en % en poids, de poudre de titanate de zirconium et d'étain selon la formule $Zr_z Ti_t Sn_s O_4$. Les poudres sont soigneusement mélangées pendant plusieurs heures par agitation dans un récipient clos avec des billes d'agate ou d'alumine en milieu aqueux ou alcoolique. Le mélange est ensuite séché, tamisé et porté à une température comprise entre 1200 et 1350°C, avantageusement à 1300°C. Puis le mélange est soumis à un préfrittage pendant plusieurs heures, à savoir 1 à 24 heures, en fonction des dimensions. Le carbonate de baryum se décompose et réagit avec les oxydes de zinc et de tantale pour former la phase pérovskite pure précitée de formule $BaZn_{1/3(1-y)}Ni_{y/3}Ta_{2/3}O_3$ le dopant aidant à l'avancement du préfrittage.

Le produit issu du préfrittage est broyé pendant plusieurs heures dans un récipient clos avec des billes d'agate ou d'alumine en milieu aqueux ou alcoolique. Le produit en poudre ainsi obtenu est séché, tamisé ou atomisé et on lui incorpore un liant organique, connu en soi, en une quantité comprise entre 0,1 à 5% en poids, pour former des particules de l'ordre de 50 à 100 $\mu$. Puis la poudre contenant ce liant est pressé axialement dans une matrice pour former des pastilles ayant par exemple un diamètre de 9,2 mm. Les pastilles sont ensuite frittées à une température de 1550 à 1650°C pendant une durée d'une demi-heure à quelques heures. Elles sont ensuite testées électriquement selon les méthodes connues et susmentionnées pour la caractérisation en tant que résonateur diélectrique par exemple aux hyperfréquences de l'ordre de 6,5 GHz. Le tableau donné indique des résultats obtenus par de tels tests.

Les propriétés diélectriques avantageuses et inattendues de la composition céramique selon l'invention sont dues à l'ajout du dopant et peuvent s'expliquer par l'intégration du dopant dans la structure cristalline de la phase pérovskite.

## Revendications

1. Composition céramique pour résonateur diélectrique à coefficient de qualité élevé, caractérisée en ce qu'elle est formée par une phase pérovskite complexe pure de formule $BaZn_{1/3(1-y)}Ni_{y/3}Ta_{2/3}O_3$, avec $0 \leqq y \leqq 0,25$, y étant un paramètre de proportions molaires, et d'une faible quantité en poids de 0,2 à 1% d'un dopant s'intégrant dans la structure cristalline de la phase pérovskite.

2. Composition céramique selon la revendication 1, caractérisée en ce que le dopant est composé de $Zr_zTi_tSn_sO_4$, où z, t et s sont des paramètres exprimant des proportions molaires et satisfaisant les inégalités suivantes :
$$0,9 \leqq t \leqq 1,1$$
$$0,1 \leqq s \leqq 0,4$$
$$0,6 \leqq z \leqq 0,9.$$

3. Composition céramique selon la revendication 2, caractérisée en ce que les paramètres de proportion molaire t, s et z sont sensiblement égaux respectivement à 1,02 ; 0,34 et 0,64.

4. Composition céramique selon l'une des revendications 2 ou 3, caractérisée en ce que le dopant est présent dans la composition à un taux compris entre 0,65 et 0,75% en poids, avec y = 0.

5. Composition céramique selon l'une des revendications 1 à 3, caractérisée en ce que le paramètre de proportion molaire y est sensiblement égal à 0,2.

6. Composition céramique selon la revendication 5, caractérisée en ce que le dopant est présent dans la composition à un taux de 0,5% en poids.

7. Procédé de fabrication de la composition céramique selon l'une des revendications 1 à 6, caractérisé en ce que l'on ajoute à des poudres de carbonate de baryum, d'oxydes de zinc et de tantale dans des proportions correspondant à la formule $BaZn_{1/3(1-y)}Ni_{y/3}Ta_{2/3}O_3$, le dopant précité, sous forme d'une poudre, en une quantité entre 0,2 à 1% en poids, mélange les poudres et le dopant en milieux aqueux ou alcoolique, effectue un préfrittage du mélange ainsi obtenu à une température comprise entre 1200 à 1350° pendant une durée de temps d'une heure à 24 heures, puis broie le produit de préfrittage, forme des pastilles et soumet ces dernières à une opération de frittage.

8. Procédé selon la revendication 7, caractérisé en ce que l'on utilise un dopant de la formule $Zr_zTi_tSn_sO_4$ précitée dont la quantité est comprise entre 0,2 à 1% en poids, avantageusement entre 0,65 à 0,75%.

9. Procédé selon l'une des revendications 7 ou 8, caractérisé en ce que l'on incorpore à la poudre obtenue à la suite du broyage du produit de préfrittage un liant organique et presse ce mélange pour former les pastilles précitées, avantageusement dans une matrice appropriée.

10. Procédé selon la revendication 9, caractérisé en ce que le liant organique est incorporé en une quantité de 0,1 à 5% en poids.

EP 0 505 246 A1

Office européen
des brevets

**RAPPORT DE RECHERCHE EUROPEENNE**

Numero de la demande

EP 92 40 0676

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 530 571 (SIEMENS AG)<br><br>* le document en entier *<br>--- | 1-3,5-7, 9-10 | C04B35/00<br>H01P7/10<br>H01B3/12 |
| A | WORLD PATENTS INDEX LATEST<br>Derwent Publications Ltd., London, GB;<br>AN 84-058107<br>& JP-B-6 203 625 (MATSUSHITA) 6 Août 1987<br>* abrégé *<br>--- | 2-4,6,8 | |
| A | US-A-4 283 753 (IAN BURN)<br>* colonne 2, ligne 12 - colonne 2, ligne 13;<br>exemples 30-33 *<br>--- | 2-4,6,8 | |
| A | EP-A-0 395 389 (SUMITOMO SPECIAL METAL CO.,LTD.)<br>* le document en entier *<br>--- | 1-10 | |
| A | EP-A-0 170 089 (E.I.DU PONT DE NEMOURS & CO.)<br>* page 7, ligne 12 - page 7, ligne 15 *<br>--- | 2-4,6,8 | |
| A | DE-A-3 331 610 (MURATA MANUFACTURING CO.,LTD.)<br>* exemple 1 *<br>--- | 1-10 | **DOMAINES TECHNIQUES RECHERCHES (Int. Cl.5)** |
| A | US-A-4 968 649 (M.TSURUMI ET AL.)<br><br>----- | | C04B<br>H01P<br>H01B |

Le présent rapport a été établi pour toutes les revendications

| Lieu de la recherche | Date d'achèvement de la recherche | Examinateur |
|---|---|---|
| LA HAYE | 24 JUIN 1992 | HARBRON J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

5